# EUROPEAN PATENT APPLICATION

(11) **EP 2 681 990 A1**
(43) Date of publication of application: **08.01.2014**
(21) Application number: 13175081.2
(22) Date of filing: 04.07.2013
(51) Int. Cl.: A01G 9/02, A01G 9/10, E04D 11/00, A01G 1/00

(54) **A green roof module**

(30) Priority: 04.07.2012 EP 12174890
(71) Applicant: Larsen A/S, 5750 Ringe (DK)
(72) Inventor: Larsen, Bastian Klarskov, 5750 Ringe (DK); Larsen, Laurits Møller, 5600 Faaborg (DK); Storm, Søren, 5550 Langeskov (DK); Larsen, Carl Johan Klarskov, 5750 Ringe (DK)
(74) Representative: Hoffmann Dragsted A/S

(57) **Abstract**

The present invention relates to a green roof module (1) for use in a level or pitched green roof, comprising a bottom element (2) and a side element (3) extending upwards from the bottom element and surrounding the bottom element for cooperating with the bottom element to form an interior space, the interior space being capable of retaining a growing medium for plants to grow in, the bottom element and side element forming a substantially square-formed roof module having four corners, characterised in that the side element comprises a tearable dividing line (4) extending in a substantially horizontal direction around the side element for dividing the side element in a non-removable part (3a) and a removable part (3b), the non-removable part being closer to the bottom element than the removable part, the removable part being capable of being partially or completely detached from the non-removable part by tearing. Furthermore, the present invention relates to a building comprising a plurality of green roof modules according the present invention and to a method of installing a plurality of green roof modules according the present invention.

## Description

### Field of the invention

The present invention relates to a green roof module for use in a level or pitched green roof. Furthermore, the present invention relates to a building comprising a plurality of green roof modules according the present invention and to a method of installing a plurality of green roof modules according the present invention.

### Background art

A green roof is a roof of a building that is partially or completely covered with soil or other growing medium and vegetation. Most green roofs are, when maturely grown, generally in green colour, but not always. Therefore, for the purposes of this specification, the term "green roof" is not intended to denote any particular colour of the roof. Green roofs provide a number of advantages over conventional roofs. They reduce the heating and cooling requirements of the building by increasing the thermal insulation of the roof. They reduce the cooling requirements of a building by evaporation of water absorbed by the roof. They can therefore act as a counter effect to the "heat island" effect in urban areas. They reduce the rate of storm water run-off from the roof, and they convert carbon dioxide to oxygen by photosynthesis. They can also filter pollutants and furthermore improve the acoustic insulation of the roof. Soil tends to filter out lower acoustic frequencies, and vegetation tends to filter out higher frequencies. They can also increase the wildlife habitat in built-up areas and in many cases increase the lifespan of the roof. For those very reasons, governmental institutions regulating the construction of buildings are looking more and more towards green roofs as a required aspect of new buildings more than as a preferred aspect by making new regulations concerning both level and pitched roofs in urban areas.

Some known green roofs are constructed from modules which are placed on a weatherproof sub-roof next to each other. Placing modules next to each other typically results in a visual indication of the border between modules even when the vegetation of the module is fully grown due to the growing medium not extending completely to the edge of the modules. In an effort to solve this problem, green roof modules have been developed to provide seamless borders between neighbouring modules by ensuring soil-to-soil contact between neighbouring modules. However, these modules are very expensive and difficult to handle during production as well as during installation of the green roof modules on a roof.

A roof module is known from EP 2 108 249 A1. The roof module has connecting means so that it may be connected to an adjacent roof module. The connecting means are he/she connections and the female part may be covered at the bottom of the module with a detaching piece. A roof module is also known from DE 196 11 660 A1.

### Summary of the invention

It is an object of the present invention to wholly or partly overcome the above disadvantages and drawbacks of the prior art. More specifically, it is an object to provide an improved green roof module which is easier to install, more versatile for tailored green roofs and cheaper to manufacture while still ensuring soil-to-soil contact between neighbouring modules to provide a seamless borders between neighbouring green roof modules.

The above objects, together with numerous other objects, advantages, and features, which will become evident from the below description, are accomplished by a solution in accordance with the present invention by a green roof module for use in a level or pitched green roof, comprising:
- a bottom element, and
- a side element extending upwards from the bottom element and surrounding the bottom element for cooperating with the bottom element to form an interior space, the interior space being capable of retaining a growing medium for plants to grow in,
- the bottom element and side element forming a substantially square-formed roof module having four corners,
**characterised in that**
the side element comprises a tearable dividing line extending in a substantially horizontal direction around the side element for dividing the side element in a non-removable part and a removable part, the non-removable part being closer to the bottom element than the removable part, the removable part being capable of being partially or completely detached from the non-removable part by tearing.

The green roof module according to the present invention may further comprise a plurality of additional tearable dividing lines extending in a substantially vertical direction for dividing the removable part into subsections of the removable element, said subsections being removable by tearing.

Furthermore, the side element may comprise, at each corner of the roof module, at least one vertically extending tearable dividing line which extends from the tearable dividing line to a top of the side element.

The tearable dividing line, the vertically extending tearable dividing lines and the additional tearable dividing lines may be perforated lines, tear notch lines, embossed lines or stamped lines.

Also, the green roof module may furthermore comprise a plurality of foldings for increasing its strength.

Moreover, the green roof module may comprise a planting recess capable of retaining at least a plant, a growing medium and water.

Further, the planting recess may comprise a planting recess wall and a planting recess bottom, and the planting recess wall may comprise a drainage opening arranged in the planting recess wall at a distance from the planting recess bottom.

The drainage opening may be arranged in the planting recess wall at a distance from the planting recess bottom at least exceeding one fourth of a planting recess wall height.

In one embodiment, the green roof module may be made from a thermoplastic material.

In another embodiment, the green roof module may be made from a vacuum formable material.

In yet another embodiment, the green roof module may be made from a UV-resistant material.

Also, the bottom element of the green roof module may comprise a plurality of profile contours for minimising growing medium erosion and maximising water retention in the green roof module on pitched roofs.

The present invention also relates to a building comprising a plurality of green roof modules as described above.

Furthermore, the present invention relates to a building comprising a plurality of green roof modules and a plurality UV-resistant green roof modules as described above.

Moreover, the present invention relates to a method of installing a plurality of green roof modules as described above, comprising the steps of:
- placing a plurality of green roof modules on a roof snug fit with neighbouring modules,
- tearing the tearable dividing line of a group of side elements facing a neighbouring green roof module, and
- removing the removable part of the group of side elements facing a neighbouring green roof module.

Said method may further comprise a step of attaching a group of removable subsections of the removable parts of side elements to neighbouring side elements.

Additionally, the method as described above may comprise a step of attaching neighbouring side elements using an attachment element.

Also, the method as described above may comprise a step of placing a plurality of UV-resistant green roof modules in positions where the green roof module is exposed to sunlight, such as at an edge of the plurality of green roof modules.

### Brief description of the drawings

The invention and its many advantages will be described in more detail below with reference to the accompanying schematic drawings, which for the purpose of illustration show some non-limiting embodiments and in which
Fig. 1 shows a side view of a green roof module,
Fig. 2 shows a perspective view of a green roof module,
Fig. 3 shows a perspective view of a green roof module,
Fig. 4 shows a side view of a green roof module,
Figs. 5a-5c show a schematic drawing of a plurality of green roof modules, and
Figs. 6a-6d show a schematic drawing of a plurality of green roof modules.

All the figures are highly schematic and not necessarily to scale, and they show only those parts which are necessary in order to elucidate the invention, other parts being omitted or merely suggested.

### Detailed description of the invention

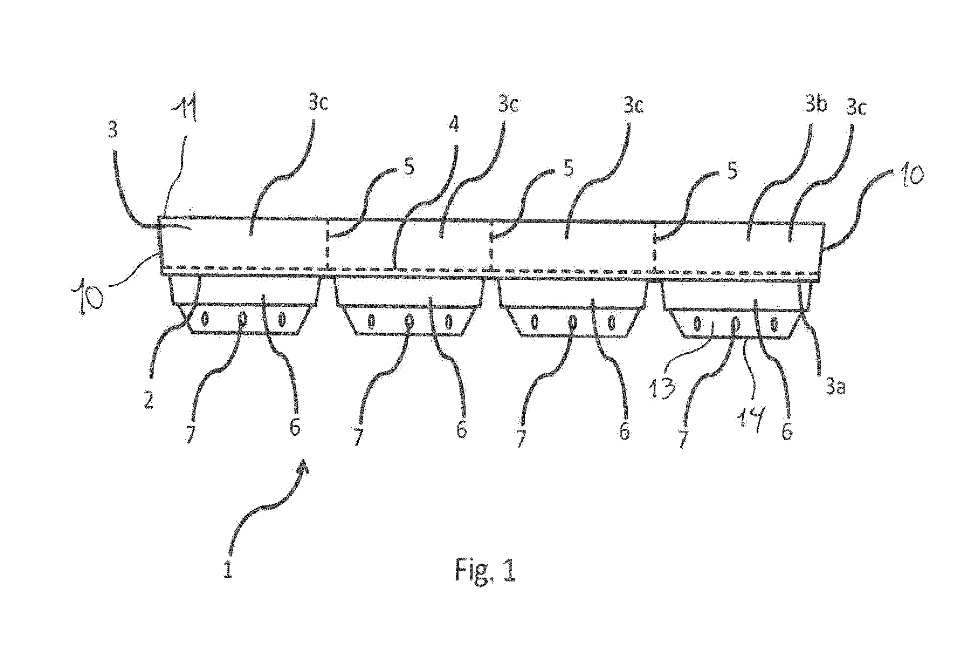

Fig. 1 shows a side view of a green roof module for use in a level or pitched green roof. Most green roofs are constructed as level roofs, but inclined or pitched surfaces are also possible. One concern of pitched roofs is an unequal water distribution from top to bottom of the roof simply due to gravitational effects resulting in drier conditions at the top and wetter conditions at the bottom of an inclined or pitched roof. The green roof module 1 comprises a bottom element 2 and a side element 3 extending upwards from the bottom element. The bottom element 2 and side element 3 cooperate to form an interior space capable of retaining a growing medium for plants to grow in. The side element 3 comprises a substantially horizontal tearable dividing line 4 extending around the side element 3 for dividing the side element in a non-removable part 3a and a removable part 3b. The non-removable part may be closer to the bottom element than the removable part. At each corner of the square-shaped roof element, the side element 3 may comprise one or more vertical tearable diving lines 10 extending from the tearable dividing line 4 to the top 11 of the side element. Due to the tearable dividing lines 4, 10, a user of the green roof module is able to partially or completely detaching the removable part from the non-removable part by tearing away the removable part at least partially. When green roof modules are installed on a roof, the removable parts between neighbouring modules may easily be teared away by the user, thereby providing soil-to-soil contact between neighbouring modules. This soil-to-soil contact leaves a seamless border between neighbouring modules, and in time the root net of the plants, when fully grown, will ensure a perfect attachment between neighbouring modules. For a group of side elements 3 not facing another green roof module, i.e. at the edge of the part of the roof covered with green roof modules, the removable part of the side elements may be left attached to the green roof modules to prevent the growing medium from eroding near the edges.

As shown in Fig. 1, the green roof module 1 may comprise additional tearable dividing lines 5, extending vertically, allowing for the division of the removable part into even smaller removable subsections 3c of the removable part 3b by tearing away only subsections of the removable part. These additional tearing lines 5 allow the user to fit perfectly or tailor the green roof modules 1 around special objects on the roof such as chimneys, venting channels, roof windows etc. Even if only a subsection of the side element 3 between two neighbouring green roof modules has soil-to-soil contact, the neighbouring modules will be well attached when fully grown.

The tearable and additional tearable dividing lines 4, 10, 5 may be provided in the side elements 3 by perforated lines in the side elements or by providing other types of tear notch lines, embossed lines or stamped lines in the side elements 3 so that the removable part may be easily removed from the non-removable part of the side element 3, the side element still having the structure required to withstand vertically and horizontally directed loads, so that the side elements do not collapse during handling before and after installation on the roof.

A solid attachment between neighbouring modules is very valuable to the quality of a green roof. As noted above, the visual expression is improved by ensuring soil-to-soil contact between neighbouring modules to provide seamless borders between modules, but also wind stability of the green roof may be significantly improved due to the adhesion between neighbouring modules. When the green roof modules are fully grown and thereby interconnected, the plurality of green roof modules is acting as one integral module, making it very wind-resistant. Wind resistance is essential to the safety of people around and below green roofs, especially with respect to very tall buildings since wind velocities may increase significantly at high altitudes.

As shown in Fig. 1, the bottom element 2 of the green roof module 1 may comprise a planting recess 6 or a plurality of planting recesses 6 for retaining plants, growing medium and water. There are several advantages of having planting recesses 6 in the bottom element 2. A very basic advantage is the increased strength of the bottom element 2 due to the geometric folding of the material, providing the structure of the bottom element with increased strength. Also in terms of pre-planting or pre-vegetation of the green roof modules prior to installation on a roof, having a planting recess similar to conventional potting equipment, e.g. potting trays, facilitates easy and inexpensive handling of the green roof modules. In terms of water retention, the planting recess also provides a compartment for retaining a water volume. As shown in Fig. 1, the planting recess may comprise a drainage opening 7 arranged in a wall 13 of the planting recess 6 at a distance from a bottom 14 of the planting recess. During extensive rainfalls or prolonged periods of rain, it is essential to the health of the vegetation in the green roof modules that the green roof modules are drained. By arranging the drainage opening 7 at a distance away from the bottom 14 of the planting recess 6, excess water is drained from the green roof module 1 while still ensuring good water retention in the green roof module due to a volume of the planting recess 6 being below the drainage opening 7. Studies have shown that the drainage opening 7 advantageously may be arranged in the planting recess wall at a distance from the planting recess bottom at least exceeding one fourth of a planting recess wall height.

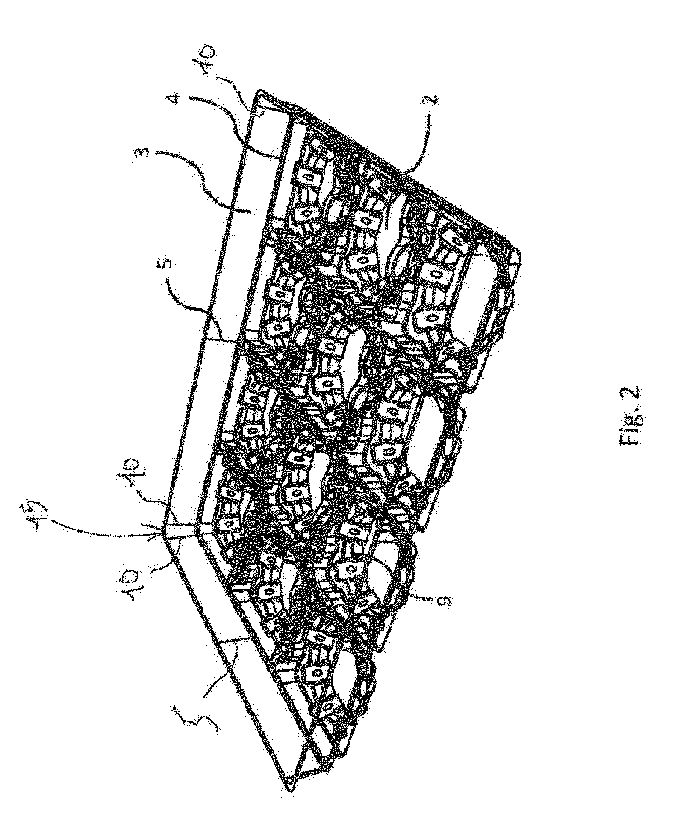

Fig. 2 shows a perspective view of a green roof module 1. As seen in Fig. 2, the green roof module 1 may be a rather complex structure in order to obtain required strength. The green roof module may be designed to have a very large number of foldings 9 to increase the rigidity of the green roof module. For this purpose, thermoplastic materials such as Amorphous Polyethylene Terephthalate (APET), Crystalline Polyethylene Terephthalate (CPET), Polypropylene (PP), Acrylonitrile Butadiene Styrene (ABS) or conventional thermoplastics are appropriate, and thermoforming techniques such as vacuum forming may be used to produce the green roof modules. Vacuum forming is a simple version of thermoforming, whereby a sheet of plastic is heated to a forming temperature, stretched onto or into a mould and held against the mould by applying a vacuum between the mould surface and the sheet. As shown in Fig. 2, the corners 15 of the roof modules may be rounded for production and strength purposes. And thus the vertical tearable diving lines 10 may be arranged on each side of the rounded corners, as shown in Fig. 2, whereby in this embodiment, each corner comprises two vertical tearable divining lines 10.

One of the advantages of having soil-to-soil contact between neighbouring modules is the lack of exposure of the module to sunlight. However, at the edges of the area covered with green roof modules, the outermost modules may still be exposed to sunlight. Therefore, by arranging a group of UV-resistant green roof modules 1 at the edges of the area covered with green roof modules, the entire green roof structure becomes very UV-resistant. Alternatively, all green roof modules may be made from a UV-resistant material, if the cost of the UV-resistant material is relatively low or if cost is not a big concern. The UV-resistant green roof modules may be produced in a different colour, either by using materials having an inherent colour difference, adding a colour additive to the UV-resistant material, painting the UV-resistant material or using a UV-resistant paint to cover a less UV-resistant green roof module material.

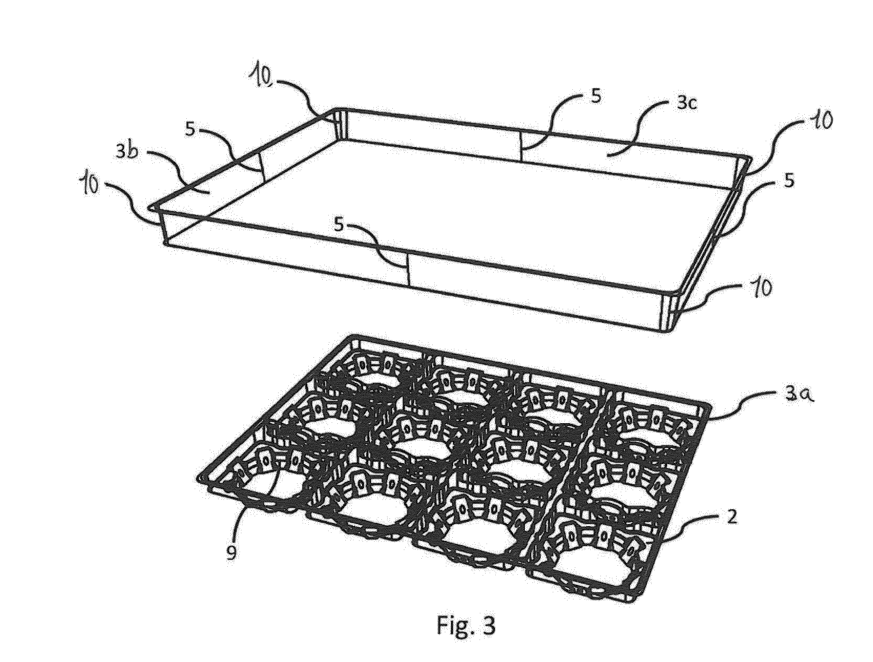

Fig. 3 shows a perspective view of a green roof module 1, where the removable part 3b of the side element 3 has been removed from the non-removable part 3a of the side element. Thus, the removable part 3b is in this embodiment completely detached from the non-removable part 3a by the two parts being divided via the horizontally extending tearable diving line (not shown).

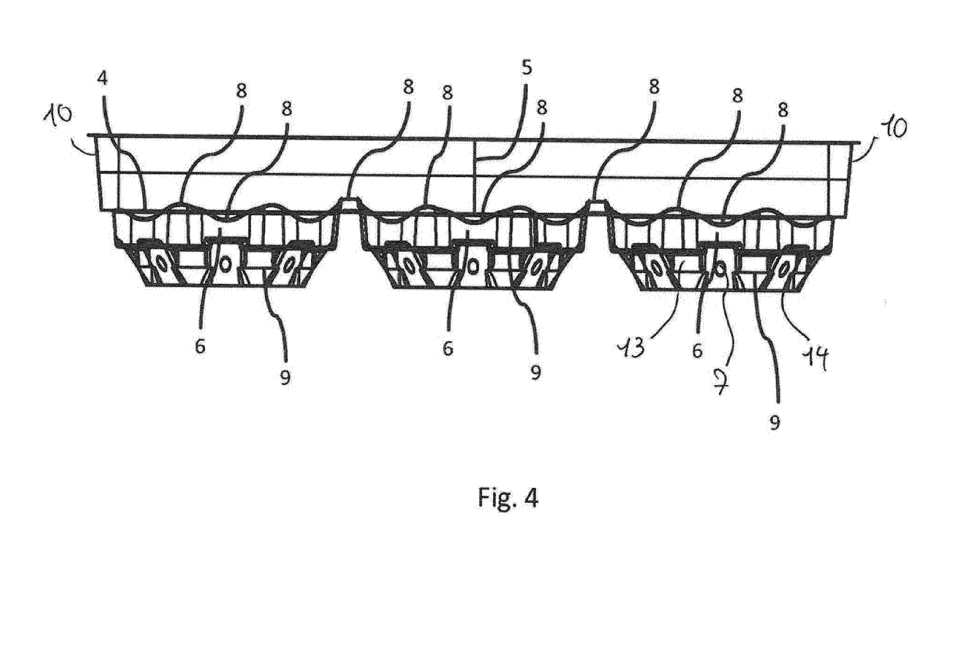

Fig. 4 is a side view an embodiment of the green roof module 1 wherein the bottom element 2 comprises a plurality of profile contours 8 for minimising erosion of the growing medium by impeding slides of the growing medium e.g. during hard rain on pitched roofs. Furthermore, as seen in Fig. 4, some of the profile contours 8 may increase the height of a barrier section between neighbouring planting recesses 6 of the bottom element, thereby improving the water retaining capabilities of the green roof module 1, especially on pitched roofs.

The invention also relates to a complete building (not shown) comprising a plurality of green roof modules 1 as herein described. By providing a building with a plurality of green roof modules 1 constituting a green roof, the building gains a number of advantages compared to conventional buildings. A building having the green roof reduces the rate of storm water run-off from the roof, and several additional advantages with respect to a lowering of carbon dioxide emission, a filtering of air and rain pollutants, acoustic noise reduction, increasing the life span of the roof etc. may be pointed out as a consequence of a building having a green roof instead of a conventional roof. Also, the green roof reduces the heating and cooling requirements of the building by increasing the thermal insulation of the roof. Furthermore, the green roof reduces the cooling requirements of a building by evaporation of water absorbed by the roof. The building comprising a green roof can therefore act as a counter effect to the "heat island" effect in urban areas.

In the present application, the terms "side element" and "bottom element" do not refer to the elements extending in a vertical or horizontal direction, but means to signify that the bottom element wholly or partially constitutes the bottom of the green roof module and that the side elements wholly or partially constitutes the sides of the green roof module and that the bottom element 2 and the side elements 3 together form an interior space capable of retaining a growing medium for plants to grow in. The bottom element may therefore also comprise vertical faces as well as the side elements may comprise horizontal faces.

The removable part in an attached state is capable of retaining a part of the growing medium that extends above the non-removable part so that when the removable part is in a detached state, the growing medium retained in the interior space may be in direct soil-to-soil contact with a growing medium of a neighbouring green roof module.

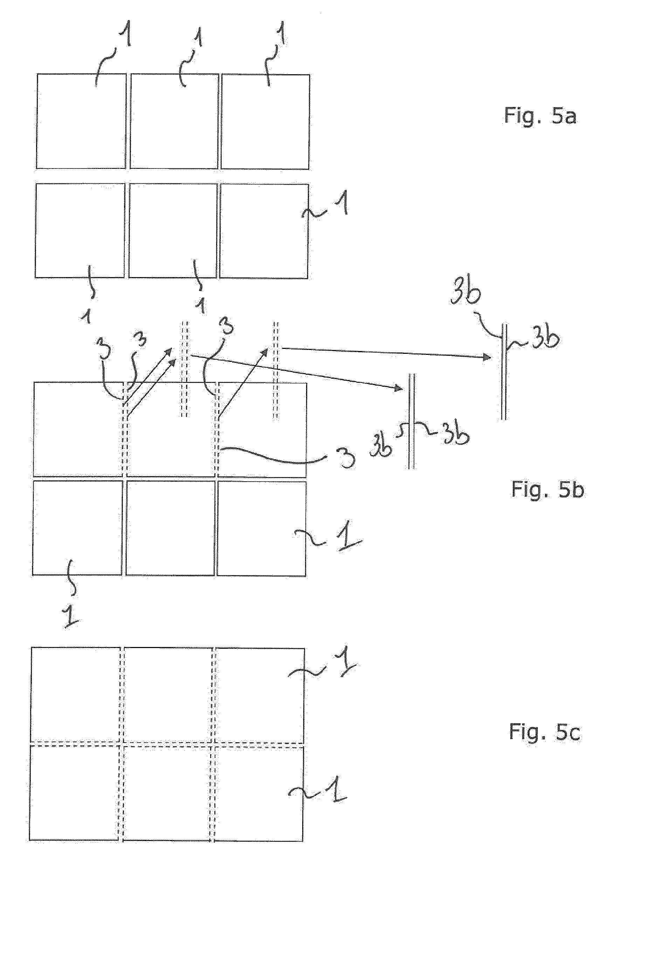

The invention also relates to a method of installing a plurality of green roof modules. Firstly, a plurality of green roof modules 1 are placed on a roof snug fit with neighbouring modules as illustrated in Fig. 5a. When the green roof modules have been placed on the roof, a group of side elements 3 is facing a neighbouring green roof module. In order to ensure soil-to-soil contact between neighbouring modules, the removable parts 3b of the group of side elements 3, which is facing a neighbouring green roof module is then removed as illustrated in Fig. 5b. When this step has been completed, all neighbouring green roof modules 1 are in soil-to-soil contact as illustrated in Fig. 5c. When the vegetation growing in these green roof modules are fully grown, the root net of the vegetation will be completely intermingled across modules, making the green roof modules completely attached.

The method according to the invention may further comprise an additional step of attaching a group of removable parts 3b of the side elements 3 to neighbouring side elements. As seen in Fig. 5c, there may be small gaps between neighbouring modules, thereby allowing some growing medium contained in the green roof modules 1 to erode through the small gaps.

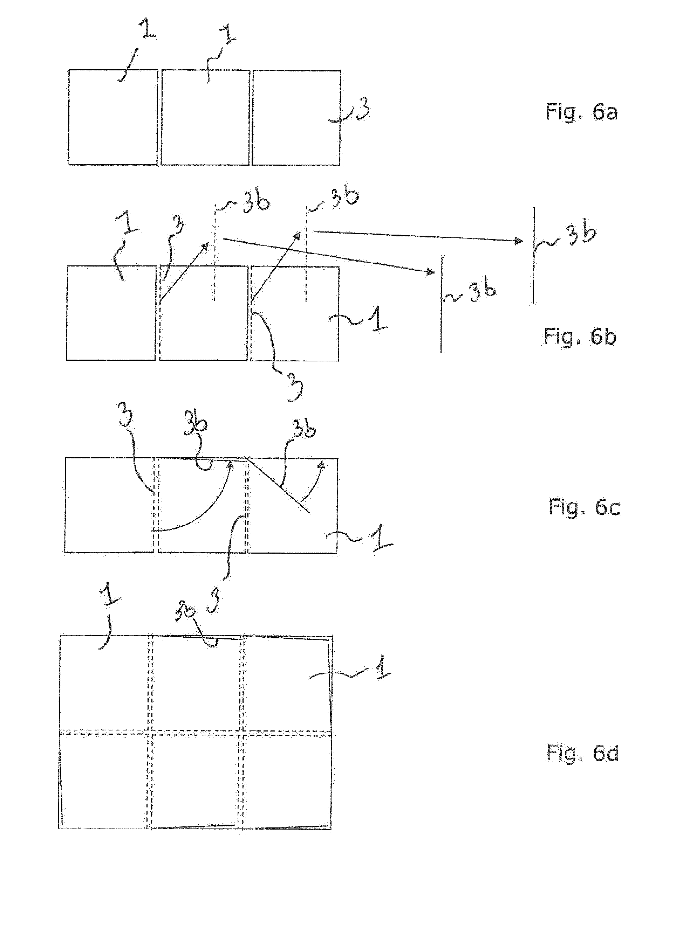

As shown in Figs. 6a-6d, this problem may, however, be minimised by attaching a removable subsection 3c to a neighbouring side element. Fig. 6a shows how a plurality of green roof modules 1 are placed snug fit on a roof. As shown in Fig. 6b, a group of the removable parts 3b of the side elements 3 are removed. As shown in Fig. 6c, a group of the removable parts 3b of the side elements 3 may be attached to neighbouring green roof modules 1. In practice, this may be done by tearing one additional tearable dividing line of a removable subsection 3c facing a neighbouring green roof module and tearing a tearable dividing line between the same removable subsection 3c and the non-removable part 3a such that the removable subsection 3c is now only connected along one additional tearing line 5. The removable subsection may then be bent towards the neighbouring green roof module and attached to the neighbouring green roof module, e.g. by arranging the removable subsection 3c between the side element and growing medium of the neighbouring green roof module as illustrated in Figs. 6c and 6d.

The method according to the invention may further comprise a step of placing a plurality of UV-resistant green roof modules in positions where the green roof module is exposed to sunlight. Typically only the edges of the plurality of green roof modules are exposed to sunlight, but around special objects on the roof such as chimneys, venting channels, roof windows etc., the green roof modules may also be exposed to sunlight. All green roof modules exposed to sunlight may advantageously be made from a UV-resistant material.

Snug fit is a fit of mechanical parts with no or practically no allowance, i.e. the closest fit that can be assembled by hand for parts that are not to move against each other. Placing them snug fit indicates that they are placed next to each other in close proximity and as close as possible without any special effort from the person or machine installing the mechanical parts snug fit, the mechanical parts being the green roof modules.

Although the invention has been described in the above in connection with preferred embodiments of the invention, it will be evident for a person skilled in the art that several modifications are conceivable without departing from the invention as defined by the following claims.

## Claims

1. A green roof module (1) for use in a level or pitched green roof, comprising:
- a bottom element (2), and
- a side element (3) extending upwards from the bottom element and surrounding the bottom element (2) for cooperating with the bottom element to form an interior space, the interior space being capable of retaining a growing medium for plants to grow in,
- the bottom element (2) and side element forming a substantially square-formed roof module having four corners (15),
**characterised in that**
the side element (3) comprises a tearable dividing line (4) extending in a substantially horizontal direction around the side element for dividing the side element in a non-removable part (3a) and a removable part (3b), the non-removable part being closer to the bottom element than the removable part, the removable part (3b) being capable of being partially or completely detached from the non-removable part by tearing.

2. A green roof module (1) according to claim 1, further comprising a plurality of additional tearable dividing lines (5) extending in a substantially vertical direction for dividing the removable part (3b) into removable subsections (3c) of the removable element (3b), said removable subsections (3c) being removable by tearing.

3. A green roof module (1) according to claims 1 or 2, wherein the tearable dividing line (4) and the additional tearable dividing lines (5) are perforated lines, tear notch lines, embossed lines or stamped lines.

4. A green roof module (1) according to any of claims 1-3, further comprising a planting recess (6) capable of retaining at least a plant, a growing medium and water.

5. A green roof module (1) according to claim 4, wherein the planting recess (6) comprises a planting recess wall (13) and a planting recess bottom (14) and wherein the planting recess wall (13) comprises a drainage opening (7) arranged in the planting recess wall (13) at a distance from the planting recess bottom (14).

6. A green roof module (1) according to any of claims 1-5, wherein the green roof module is made from a thermoplastic material.

7. A green roof module (1) according to any of claims 1-6, wherein the green roof module is made from a vacuum formable material.

8. A green roof module (1) according to any of claims 1-7, wherein the green roof module is made from a UV-resistant material.

9. A green roof module (1) according to any of claims 1-8, wherein the bottom element comprises a plurality of profile contours (8) for minimising growing medium erosion and maximising water retention in the green roof module on pitched roofs.

10. A building comprising a plurality of green roof modules according to any of claims 1-9.

11. A building comprising a plurality of green roof modules according to any of claims 1-8 and a plurality UV-resistant green roof modules according to claim 9.

12. A method of installing a plurality of green roof modules according to any of claims 1-9, comprising the steps of:
- placing a plurality of green roof modules on a roof snug fit with neighbouring modules,
- tearing the tearable dividing line (4) of a group of side elements facing a neighbouring green roof module, and
- removing the removable part of the group of side elements facing a neighbouring green roof module.

13. A method according to claim 12, further comprising a step of attaching a group of removable subsections (3c) of the removable parts (3b) of side elements (3) to neighbouring side elements.

14. A method according to claim 12, further comprising a step of attaching neighbouring side elements using an attachment element.

15. A method according to any of claims 12-14, further comprising a step of placing a plurality of UV-resistant green roof modules in positions where the green roof module is exposed to sunlight, such as at an edge of the plurality of green roof modules.
